# EUROPEAN PATENT APPLICATION

(11) **EP 4 803 175 A1**
(43) Date of publication of application: **09.09.2026**
(21) Application number: 25162727.9
(22) Date of filing: 10.03.2025
(51) Int. Cl.: B01D 53/02, B01J 20/22

(54) **PROTON HOP ASSISTED CARBON DIOXIDE (CO2) TRANSPORT IN AN AMINE POWDER FOR THE DIRECT AIR CAPTURE AND SEQUESTRATION (DAC+S) OF CO2**

(30) Priority: 04.03.2025 US 202519069566
(71) Applicant: Spiritus Technologies, PBC, White Rock, NM 87547 (US)
(72) Inventor: Lee, Matthew Nicholson, Los Alamos, 87544 (US); Cadieu, Charles Frederick, Burlingame, 94010 (US); Tew, Emily Webster, Jemez Springs, 87025 (US); Crall, Matthew Douglass, White Rock, 87547 (US); Warner, Benjamin Peter, Los Alamos, 87544 (US)
(74) Representative: Bringer IP

(57) **Abstract**

A proton hop supported gas adsorption/desorption of carbon dioxide (CO₂) gas molecules in a sorbent powder is provided. The proton hop supported gas adsorption/desorption includes a configuration of liquid wetting amine particulate grains which is sufficient to suppress carbamic acid production from present CO₂ gas molecules in favor of carbonate production. Thereafter, CO₂ gas molecules interact with the liquid in proximity to an ingress surface of respective ones of the grains. Protons of the liquid proton hop from one amine location of a grain to another in correspondence to the progressive binding of resulting carbonates formed from the CO₂ gas molecules and the hydroxyls of the liquid, from locations nearest to the ingress surface towards locations nearest to an egress surface of the grains. The protons then rejoin with counterpart hydroxls reforming the liquid, whilst the CO₂ gas molecules each are released at the egress surface into a sequestration container.

## Description

### BACKGROUND OF THE INVENTION

### Field of the Invention

The present invention relates to the field of gas adsorption and more particularly to the field of the adsorption performance optimization of an amine powder sorbent used in the DAC+S of CO₂.

### Description of the Related Art

DAC+S of CO₂ refers to the direct air capture and sequestration of CO₂ so as to remove CO2 from Earth atmosphere thereby promoting a remedial effect on climate change. General forms of DAC+S include the placement of an amine sorbent in a forced air (or passive air) environment allowing CO₂ gas molecules to adsorb onto the surface of the amine sorbent. Subsequently, the amine sorbent is moved into a desorption environment in which energy applied to the sorbent promotes the desorption of the adsorbed CO₂ gas molecules into a sequestration container. With the container permanently storing the CO₂ gas molecules, less CO₂ will be present in Earth atmosphere.

The principal barrier to the use of DAC+S to remove a meaningful quantity of CO₂ from Earth atmosphere is the economic cost of both adsorption phase of DAC+S and also the desorption phase of DAC+S. The economic cost in adsorption includes the cost of producing sorbent material, the efficiency of the sorbent material in rapidly adsorbing sufficient quantities of CO₂ relative to the cost of producing the sorbent material, and the resilience (re-usability) of the sorbent material. The cost of desorption includes the energy required to promote the desorption of CO₂ from the sorbent material and the rate at which the CO₂ fully desorbs from the sorbent material. Of note, in a gas desorption environment, an additional cost lies in the condensing of water present in the same volume as the desorbing CO₂. Indeed, the cost of addressing unwanted water in the same volume as the CO₂ during desorption is a prime cause of the inverted (e.g. unprofitable) economics of DAC+S. Thus, in DAC+S, water has long been considered the enemy.

### BRIEF SUMMARY OF THE INVENTION

Embodiments of the present invention address deficiencies of the art in respect to the adsorption of CO₂ gas molecules onto a dry sorbent, and the desorption of the CO₂ gas molecules from the dry sorbent, and provide a novel and non-obvious method and system for gas adsorption and desorption transport of CO₂ molecules in a wetted amine powder sorbent as opposed to a conventional dry sorbent.

To that end, in an embodiment of the invention, proton hopping is performed in connection with a wetted amine powder so as to support high performance gas adsorption and desorption of CO₂ gas molecules in the sorbent powder. The method includes configuring liquid used to wet amine particulate grains sufficient to suppress carbamic acid production from present CO₂ gas molecules in favor of carbonate production, for example, by maintaining a dielectric constant of the liquid to less than twenty (20). Thereafter, CO₂ gas molecules interact with the liquid in proximity to an ingress surface of different ones of the grains to form carbonic acid. Protons of the carbonic acid are transferred from the carbonic acid to the sorbent to form an ammonium carbonate and/or an ammonium bicarbonate; these protons are then hopped from one amine location of respective ones of the grains to another in correspondence to the progressive binding of resulting carbonates and bicarbonates, from locations nearest to the ingress surface towards locations nearest to an egress surface of the grains. Ultimately, the protons are rejoined with the carbonate and/or bicarbonate, allowing the CO₂ gas molecules to be released at the egress surface into a sequestration container.

In this way, the COₛ gas molecules rapidly move to each available amine site of each particulate grain so as to maximize the volume of CO₂ adsorbed by the amine powder, in a minimum period of time. Further, in so far as the production of carbamic acid is suppressed by the configuration of the liquid in favor of carbonate production, the activation energy required to promote desorption of the adsorbed CO₂ gas molecules is greatly reduced. Consequently, the energy conservation produced by the use of a wetted amine powder during the adsorption phase and the desorption phase of DAC+S outweigh the otherwise undesirable effect of water in DAC+S.

In a more particular embodiment of the invention, viewed from the perspective of a single amine particulate grain of a wetted amine powder, a proton hop assisted transport method for CO₂ transport in gas adsorption and desorption includes suppressing carbamic acid production from CO₂ in an amine particulate grain during wetting of the grain so as to permit an increased presence of carbonates in the amine particulate grain. The method additionally includes receiving CO₂ gas molecules in proximity to the liquid at an ingress surface of the amine particulate grain to produce carbonates and counterpart protons. The method further includes progressively binding electrostatically linked ones of the protons to corresponding ones of the carbonates from an amine location nearest to the ingress surface towards an egress surface of the amine particulate grain. Finally, the method includes releasing the CO₂ gas molecules at the egress surface from the carbonates and sequestering the released CO₂ gas molecules from the egress surface into a sequestration container.

Aspects of both embodiments include variations of the wetted amine powder such as:
- an amine powder wetted with water (H₂O), and more specifically, an amine powder in H₂O and then strained to leave the H₂O predominately only in the amine particulate grains and not in the interstitial spaces between the amine particulate grains.
- an amine powder wetted with water (H₂O), and more specifically, an amine powder in H₂O and then centrifugated to leave the H₂O predominately only in the amine particulate grains and not in the interstitial spaces between the amine particulate grains.
- the wetted amine powder is an amine powder wetted with a room temperature ionic liquid (RTIL) or a mixture of H₂O and RTIL.

In yet another embodiment of the invention, a gas adsorption and desorption apparatus is provided. The apparatus includes a conveyor that motivates an amine powder from an adsorption zone to a desorption zone and then back to the adsorption zone. The apparatus additionally includes a wetting segment disposed at a portion of the conveyor prior to the adsorption zone and which is adapted to wet the amine powder. Finally, the apparatus includes a sequestration container.

As to the wetted amine powder, when in the adsorption zone and wetted, the powder is adapted to receive CO₂ gas molecules in proximity to an ingress surface of an amine particulate grain amongst multiple amine particulate grains of the wetted amine powder, suppressing carbamic acid production from the CO₂ in the amine particulate grain so as to permit an increased presence of carbonates in the amine particulate grain, and progressively binding the carbonates from amine locations nearest to the ingress surface towards an egress surface of the amine particulate grain. Thereafter, while the amine powder is in the desorption zone, the amine powder releases the CO₂ gas molecules at the egress surface from the carbonates for sequestration into the sequestration container.

In one aspect of the embodiment, the wetting segment wets the amine powder with a liquid having a dielectric constant less than twenty (20) (water having a dielectric constant of seventy-eight under ordinary conditions). In a more particular aspect of the embodiment, the wetting segment wets the amine powder with a liquid having a dielectric constant between ten (10) and fifteen (15). In yet a further aspect of the embodiment, a centrifuge is provided in order to strain excess liquid from the wetted amine powder prior to the adsorption zone leaving remaining liquid predominately only in the amine particulate grain and not in the interstitial spaces.

Additional aspects of the invention will be set forth in part in the description which follows, and in part will be obvious from the description, or may be learned by practice of the invention. The aspects of the invention will be realized and attained by means of the elements and combinations particularly pointed out in the appended claims. It is to be understood that both the foregoing general description and the following detailed description are exemplary and explanatory only and are not restrictive of the invention, as claimed.

### BRIEF DESCRIPTION OF THE SEVERAL VIEWS OF THE DRAWINGS

The accompanying drawings, which are incorporated in and constitute part of this specification, illustrate embodiments of the invention and together with the description, serve to explain the principles of the invention. The embodiments illustrated herein are presently preferred, it being understood, however, that the invention is not limited to the precise arrangements and instrumentalities shown, wherein:
Figure 1 is pictorial illustration of a proton hop assisted transport process for CO₂ transport in gas adsorption and desorption supported by a wetted amine powder;
Figure 2 is a pictorial illustration of a gas adsorption process performed with respect to the wetted amine powder of Figure 1; and,
Figure 3 is a schematic illustration of a gas adsorption and desorption apparatus adapted for the proton hop assisted transport of CO₂ of Figure 2.

### DETAILED DESCRIPTION OF THE INVENTION

Embodiments of the invention provide for proton hop assisted transport of CO₂ in gas adsorption and desorption. In accordance with an embodiment of the invention, liquid such as water is confined by the sorbent such that it has a dielectric constant of less than 20. Subsequently, the amine powder is strained, centrifugated or otherwise agitated to remove excess liquid from the interstitial space between the grains to produce a wetted amine powder. CO₂ is then introduced to the wetted amine powder either passively or actively with forced air, and in response, the CO₂ molecularly engages with water in the liquid to produce for each CO₂ gas molecule, carbonic acid which reacts to transfer a proton to the sorbent, while the production of carbamic acid is suppressed owing to the chemical configuration of the liquid.

Each of the free protons that is separated from the liquid during the production of the carbonic acid and that is not bound to a carbonate is then electrostatically tethered to a corresponding carbonate and/or bicarbonate and the free proton then hops from amine location to a next nearest amine location on a corresponding one of the amine particulate grains. Importantly, the hopping of the free protons with tethered carbonates drives the carbonates away from an exterior of the powder and into the interior portions of the powder so as to permit an optimized adsorption of a maximum volume of CO₂ by the powder. Subsequently, in response to a thermal input promoting desorption, each carbonate tethered to a corresponding free proton frees an encapsulated CO₂ at an egress point of the grain allowing the carbonic acid to reconstitute and decompose into CO₂ and water leaving the CO₂ free to exit the amine powder into sequestration.

In this regard, once the CO₂ has exited the amine powder, the CO₂ may be stored in a container, either artificial such as a storage tank, or natural such as a geological formation, or the CO₂ may be dynamically utilized in a succedent process. Examples of succedent processes include enhanced oil recovery (EOR), in which the CO₂ once captured can be injected into an oil reservoir in order to increase the extraction efficiency of the reservoir. Another example is the conversion of the CO₂ into a chemical or fuel. As yet another example, the CO₂ once captured can be used in an agricultural practice, such as improving greenhouse growth conditions or as a feedstock for algae cultivation. One of skill in the art will recognize yet further alternative uses for captured CO₂.

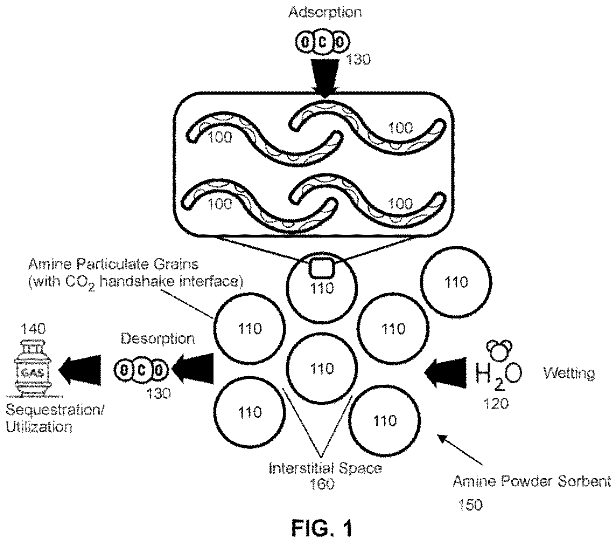

In further illustration, Figure 1 is pictorial illustration of a proton hop assisted transport process for CO₂ transport in gas adsorption and desorption supported by a wetted amine powder. As shown in Figure 1, an amine powder sorbent 150 of a multiplicity of different cross-linked amine particulate grains 110 of different grain portions 100 is provided. Each of the cross-linked amine particulate grain portions 100 includes a CO₂ attachment interface (namely an amine) at which a proton binds. The amine powder sorbent 150 is wetted with a liquid including water 120 such as H₂O and RTIL, RTIL or just H₂O. But, the wetted amine powder sorbent 150 is then strained or centrifugated in order to leave liquid only within cross-linked amine particulate grains 110 and not in the interstitial space 160 between the amine particulate grains 110.

Subsequently, the portions 100 of the cross-linked amine particulate grains 110 of the now wetted amine powder sorbent 150 is exposed to atmospherically present CO₂ 130 during an adsorption phase of the transport process. During the adsorption phase of the transport process, the CO₂ reacts with water to form carbonic acid, which transfers a proton to the amine to form an ammonium bicarbonate or ammonium carbonate (collectively referred to as carbonates). Each of the carbonates, in turn, are electrostatically tethered to a corresponding proton of the ammonium and rapidly hops to other locations of the sorbent, bringing along the electrostatically tethered bicarbonate or carbonate. In this way, the CO₂, combined with the hydroxyl in the form of a carbonate, is efficiently and quickly motivated by the hopping action of the electrostatically tethered proton, away from the exterior of the amine particulate grain 110, and into the interior reaches of the amine particulate grain 110. Thereafter, an application of thermal energy to the amine particulate grain 110 promotes a desorption phase during which the CO₂ de-binds from the CO₂ handshake interface and the CO₂ exits the amine particulate grain 110 for sequestration in a container 140.

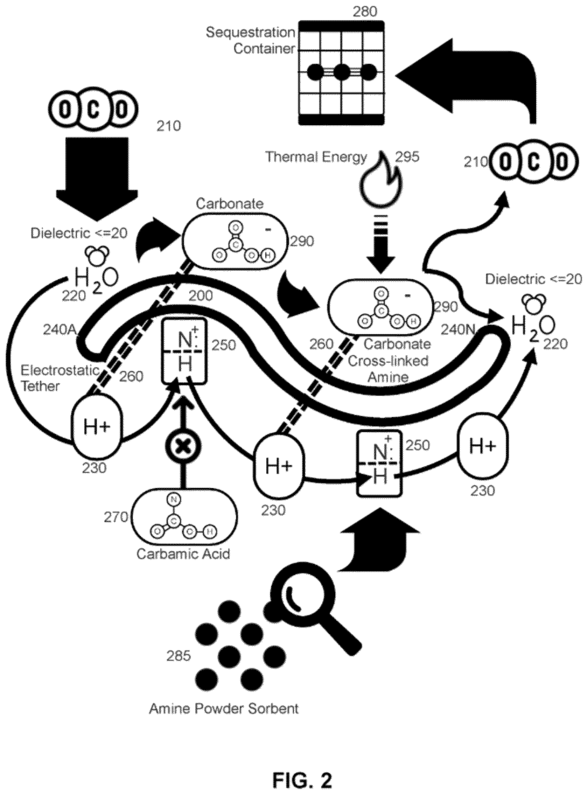

In more particular illustration of the proton hop assisted transport process of Figure 1, Figure 2 is pictorial illustration of a proton hop assisted transport process for CO₂ transport in gas adsorption and desorption for the wetted amine of Figure 1. As shown in Figure 2, a cross-linked amine particulate grain 200 of an amine powder sorbent 285 is wetted with liquid 220 having a dielectric constant of 20 or less. CO₂ gas molecules 210 are then introduced to an ingress surface 240A of the cross-linked amine particulate grain 200 so that the CO₂ gas molecules combine with a water of the liquid 220, followed by release of proton 230 to form a carbonate 290 while having an electrostatic tether 260 to a free proton 230 of the ammonium 250. The free proton 230, while tethered to the carbonate 290, then combines with an amine site 250 of the cross-linked amine particulate grain 200.

Proton hopping is then performed during which the proton 230 moves from nitrogen site 250 to nitrogen site 250 of the cross-linked amine particulate grain, all the while with its counterpart carbonate 290 remaining tethered to the proton 230 so that the counterpart carbonate 290 also moves along the cross-linked amine particulate grain 200 towards an egress surface 240N. Upon reaching an egress surface 240N of the amine particulate grain 200, responsive to the application of thermal energy 295 sufficient to promote desorption, the counterpart carbonate 290 reforms carbonic acid and exits the sorbent, then disassembles into CO₂ 210 and water.. The CO₂ 210 in turn can be driven into a sequestration container 280.

Of import, owing to the sorbent particles being wetted with confined water, the carbon dioxide preferentially forms carbonate versus carbamate. In this regard, the lower dielectric liquid 220 of dielectric 20 or less (and preferably 10 to 15), inhibits a charge based reaction between the CO₂ and the nitrogen and instead promotes the reaction of the CO₂ with the liquid 220 to produce carbonate 290. Carbamic acids have a stronger bonding energy and a higher activation energy compared to ammonium carbonates; therefore the presence of carbamic acid 270 in lieu of carbonate 290 is undesirable owing to the increased energy requirement to release CO₂ from carbamic acid as compared to the lower energy requirement to release CO₂ from carbonate during desorption, as well, absent the lower activation needed to transport carbonate 290 relative to a carbamic acid. When carbamates predominate, there can be no proton hopping and it is the proton hopping action which allows for the interior reaches of the cross-linked amine particulate grains 200 to be reached by the carbonate so as to adsorb a maximum volume of CO₂ in the amine powder sorbent 285.

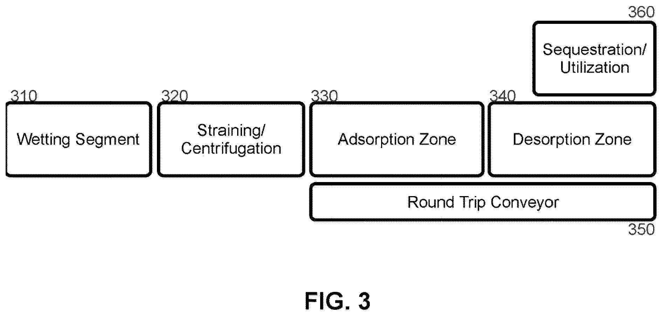

The process described in connection with Figure 2 can be implemented within a gas adsorption and desorption apparatus. In further illustration, Figure 3 schematically shows a gas adsorption and desorption apparatus adapted for the proton hop assisted transport of CO₂ of Figure 2. Referring to Figure 3, a gas adsorption and desorption apparatus includes a round trip conveyor 350, conveying amine powder sorbent between an adsorption zone 330 and a desorption zone 340. The gas adsorption and desorption apparatus further includes a wetting segment 310 positioned in advance of the adsorption zone 330. The gas adsorption and desorption apparatus yet further includes a sequestration container 360. Finally, a straining/centrifugation component 320 is positioned between the wetting segment 310 and the adsorption zone 330.

The wetting segment 310 produces confined liquid of dielectric constant less than 20 to amine powder sorbent and the straining/centrifugation component 330 removes the liquid from the amine powder sorbent excepting for the interstitial space in between the cross-linked amine particulate grains of the powder sorbent. The adsorption zone 330 exposes the wetted amine powder sorbent to CO₂ in a passive or forced air contactor. The round trip conveyor 350 moves the wetted amine powder sorbent from the adsorption zone 330 to the desorption zone 340. In the desorption zone 340, thermal energy is applied to the wetted amine powder sorbent to promote desorption of CO2 adsorbed to the cross-linked amine grains of the powder into the sequestration container 360.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "include", "includes", and/or "including," when used in this specification, specify the presence of stated features, steps, operations, elements, and/or components, but do not preclude the presence or addition of one or more other features, steps, operations, elements, components, and/or groups thereof. The corresponding structures, materials, acts, and equivalents of all means or step plus function elements in the claims below are intended to include any structure, material, or act for performing the function in combination with other claimed elements as specifically claimed.

The description of the present invention has been presented for purposes of illustration and description but is not intended to be exhaustive or limited to the invention in the form disclosed. Many modifications and variations will be apparent to those of ordinary skill in the art without departing from the scope and spirit of the invention. The embodiment was chosen and described in order to best explain the principles of the invention and the practical application, and to enable others of ordinary skill in the art to understand the invention for various embodiments with various modifications as are suited to the particular use contemplated.

Having thus described the invention of the present application in detail and by reference to embodiments thereof, it will be apparent that modifications and variations are possible without departing from the scope of the invention defined in the appended claims as follows:

## Claims

1. A proton hop assisted transport method for carbon dioxide (CO₂) transport in gas adsorption and desorption, the method comprising:
confining a liquid in a powder of amine particulate grains in order to suppress carbamic acid production from CO₂ proximate to the amine particulate grains (110, 200) so as to permit an increased presence of carbonates in the amine particulate grains;
receiving CO₂ gas molecules in proximity to an ingress surface of each of the amine particulate grains;
interacting each of the CO₂ gas molecules (210) with the liquid to produce, for each of the CO₂ gas molecules, a carbonate (290) and corresponding protons;
electrostatically tethering each said carbonate with each said corresponding proton and proton hopping each said corresponding proton from one amine location nearest to the ingress surface (240A) towards an amine location at an egress surface (240N) of the amine particulate grain;
applying a thermal input to the powder;
responding to the application of the thermal input by releasing CO₂ gas molecules at the egress surface from the carbonates; and,
sequestering the released CO₂ gas molecules from the egress surface into a sequestration container.

2. The method of claim 1, wherein the configuration of the liquid comprises maintaining a dielectric constant of the liquid to less than twenty (20) by confining the liquid in the wetted powder.

3. The method of claim 1, wherein the wetted powder is an amine powder wetted with water (H₂O) inside the amine particulate grains and not in the interstitial spaces (160).

4. The method of claim 3, wherein the wetted powder is an amine powder first exposed to water (H₂O) and then strained to leave the water (H₂O) predominately inside the amine particulate grains and not in the interstitial spaces (160).

5. The method of claim 2, wherein the wetted powder is an amine powder first exposed to water (H₂O) and then centrifugated to leave the water (H₂O) predominately inside the amine particulate grains and not in the interstitial spaces (160).

6. The method of claim 1, wherein the wetted powder is an amine powder wetted with a room temperature ionic liquid (RTIL).

7. The method of claim 1, wherein the wetted amine powder is an amine powder wetted with a mixture of water (H₂O) and RTIL.

8. A gas adsorption and desorption apparatus comprising:
a conveyor (350) motivating an amine powder from an adsorption zone (330) to a desorption zone (340) and then back to the adsorption zone;
a wetting segment (310) disposed at a portion of the conveyor prior to the adsorption zone and adapted to wet the amine powder while minimizing water in the interstitial spaces;
the wetted amine powder at the adsorption zone, once wetted, receiving carbon dioxide (CO₂) gas molecules in proximity to an ingress surface of an amine particulate grain amongst multiple amine particulate grains of the wetted amine powder, suppressing carbamic acid production from the CO₂ in the amine particulate grain so as to permit an increased presence of carbonates in the amine particulate grain, and progressively binding the carbonates from amine locations nearest to the ingress surface towards an egress surface of the amine particulate grain; and,
the amine powder at the desorption zone releasing the CO₂ gas molecules at the egress surface from the carbonates and sequestering the released CO₂ gas molecules from the egress surface into a sequestration container (360).

9. The apparatus of claim 8, wherein the wetting segment (310) wets the amine powder with a liquid having a dielectric constant less than thirty (20).

10. The apparatus of claim 8, wherein the wetting segment (310) wets the amine powder with a liquid having a dielectric constant between ten (10) and fifteen (15).

11. The apparatus of claim 8, further comprising a centrifuge straining excess liquid from the wetted amine powder prior to the adsorption zone leaving remaining liquid predominately inside the amine particulate grains and not in the interstitial spaces.
